# EUROPÄISCHE PATENTANMELDUNG

(11) **EP 1 132 670 A2**
(43) Veröffentlichungstag der Anmeldung: **12.09.2001**
(21) Anmeldenummer: 01105715.5
(22) Anmeldetag: 07.03.2001
(51) Int. Cl.: F16K 27/10

(54) **Schiebergehäusemittelteil**

(30) Priorität: 07.03.2000 DE 10010364
(71) Anmelder: Josch Strahlschweisstechnik GbmH, 06193 Teicha (DE)
(72) Erfinder: Schenke, Joachim, 39118 Magdeburg (DE); Sobisch, Götz, 06193 Teichau (DE); Philipp, Steffen, 06188 Hohenthurm (DE)
(74) Vertreter: Leinung, Günter

(57) **Zusammenfassung**

Die Erfindung betrifft ein Schiebergehäusemittelteil, welches durch Verschweißung von einzelnen Schweißbaugruppen hergestellt wird.

So besteht das Schiebergehäusemittelteil aus den Bauteilen Rohr 1, Halbkugelboden 2 und Stutzen 3 mit Gehäusesatz 4. Die Bauteile 1, 2, 3 und 4 werden vor dem Schweißen mechanisch bearbeitet und in ihrer finalen Position montiert und mittels eines geeigneten Schweißverfahrens, bevorzugt mittels eines Lasers, geheftet und mit einem Elektronenstrahl verschweißt.

## Beschreibung

Die Erfindung betrifft eine Vorrichtung entsprechend dem Oberbegriff des Patentanspruches 1

Es ist bekannt, daß Schiebergehäuse durch die Verschweißung von Schweißbaugruppen hergestellt werden.

Variante 1: Geschmiedete Halbschalen, an welche die Stutzen angeschmiedet sind, werden aufeinandergelegt und mit oder ohne Zusatzmaterial bei entsprechender Nahtvorbereitung verschweißt. Die Schweißung in der Untervariante ohne Zusatzmaterial wird mit dem Elektronenstrahl vorgenommen.

Variante 2: Rohr und Halbkugelboden werden verschweißt mit bzw. ohne Zusatzmaterial. Danach werden die Öffnungen für die Stutzen ausgefräst. Danach werden die Stutzen mit einer entsprechenden Nahtvorbereitung in das Gehäuserohr eingeschoben und mit einer entsprechenden Nahtvorbereitung mit Zusatzmaterial verschweißt.

Zur Variante 1: Hohe Kosten für Gesenk, technologische Grenzen für die Schmiedeausformung des Keilsitzes bzw. der Stutzenlänge, hohe Rüstkosten des Schmiedens bei kleinen Stückzahlen.

Zu Variante 2: Hohe Kosten für die Einschweißung der Stutzen sowie hohe Kosten für die Bearbeitung des Gehäusesitzes nach dem Schweißen.

Es ist daher Aufgabe der Erfingung, ein universell einsetzbares elektronenstrahlgeschweißtes Gehäusemittelteil für Schieber zu schaffen, das aus einem mechanisch bearbeiteten Rohr, einem mechanisch bearbeiteten gepreßten oder geschmiedeten oder aus Vollmaterial gefertigten Kugelboden und fertigbearbeiteten Stutzen mit Gehäusesitz besteht und ein Einschweißen mit dem Elektronenstrahl bei den zwangsläufig wechselnden Schweißtiefen der Durchdringungsfläche Rohr/Stutzen einfach realisiert werden kann.

Diese Aufgabe wird mit einer Gehäusemittelteilkonstruktion mit den Merkmalen des Anspruches 1 gelöst.

Durch die Fertigbearbeitung der Kontur des Stutzens mit dem Gehäusesitz und der speziellen Nahtvorbereitung der Einschweißung des Stutzens in die Schweißbaugruppe Rohr/Boden wird eine kostengünstige Einschweißung der Stutzen erreicht, eine aufwendige nachfolgende Bearbeitung der Gehäusesitzpartie vermieden und es kann, bis auf die Einbeziehung von gepreßten, auf standardisierte Kugelböden, auf geschmiedete, gegossene Bauteile mit geringen Kosten für Gesenk bzw. Modell zurückgegriffen werden.

Bedingt durch die höhere Nahttiefe im unteren Bereich der Auflagefläche des Stutzens im Halbkugelboden wird eine besonders starre Verbindung erzielt mit der Auswirkung, daß ein starres Verhalten des Gehäusesitzes erreicht wird mit vorteilhaften Wirkungen auf das Dichtheitsverhalten des Schiebers.

Die Konstruktion ist sowohl für alle gängigen Gehäusewandstärkenbereiche des Armaturenbaus, d. h. von Niederdruck bis Hochdruck, geeignet.

Die Konstruktion des Gehäusemittelteiles ist geeignet als Basiselement für vielfältige Komplettierungsvarianten wie Einschweißenden, Flansche verschiedener Druckstufen und Normen (DIN, ANSI, etc.), Deckelausführungen sowie Gehäuse mit Aufsatz oder druckdichtender Deckelfunktion.

Durch die Verwendung von Stutzen aus korrosionsbeständigem Material kann das Auftragsschweißen des korrosionsbeständigen Gehäusesitzes entfallen.

Ausführungsbeispiele der Erfindung sind in der Zeichnung dargestellt und werden im folgenden beschrieben. Es zeigt
- Figur 1:: ein Schiebergehäusemittelteil Rohr/Kugelboden
- Figur 2:: eine weitere Ausführung eines Schiebergehäusemittelteiles Rohr/Kugelboden

Das Schiebergehäusemittelteil besteht aus den Bauteilen Rohr 1, Halbkugelboden 2 und Stutzen 3 mit Gehäusesitz 4. Die Bauteile 1, 2/3 und 4 werden vor dem Schweißen mechanisch bearbeitet und komplett in der finalen Position montiert und über ein geeignetes Verfahren, bevorzugt mit Laser, geheftet. Die Bauteile werden dann in der Elektronenstrahlschweißanlage positioniert und wie folgt mit dem Elektronenstrahl verschweißt.

Figur 1:
Verschweißung von Rohr 1 und Halbkugelboden 2 mit dem Elektronenstrahl. Mechanische Ausarbeitung der Durchführung des Stutzens 3 in der Schweißbaugruppe Rohr 1/Halbkugelboden 2. Einsetzen der Stutzen 3 in die Schweißbaugruppe Rohr 1/ Halbkugelboden 2 derart, daß die am Stutzen 3 mechanisch angearbeitete Schweißnahtkontur mit der Außenkontur der Stutzendurchführung der Schweißbaugruppe Rohr 1/Halbkugelboden 2 übereinstimmt.
Damit ist gesichert, daß der Elektronenstrahl parallel umlaufend zum Stutzen 3, d. h. parallel zur Achse des Stutzens 3 geführt werden kann. Dies ermöglicht über die mit dem Umlauf es Strahles variierenden Schweiß- und Positionsierungsparamter die wechselnden Schweißtiefen der Berührungsflächen Schweißbaugruppe Rohr 1/Halbkugelboden 2 mit dem Stutzen 3 vollständig. D. h. ohne Restspalte zu verschweißen bis zu Schweißnahttiefen von 200 mm ohne Zusatzmaterial und in einem Umlauf des Elektronenstrahles.

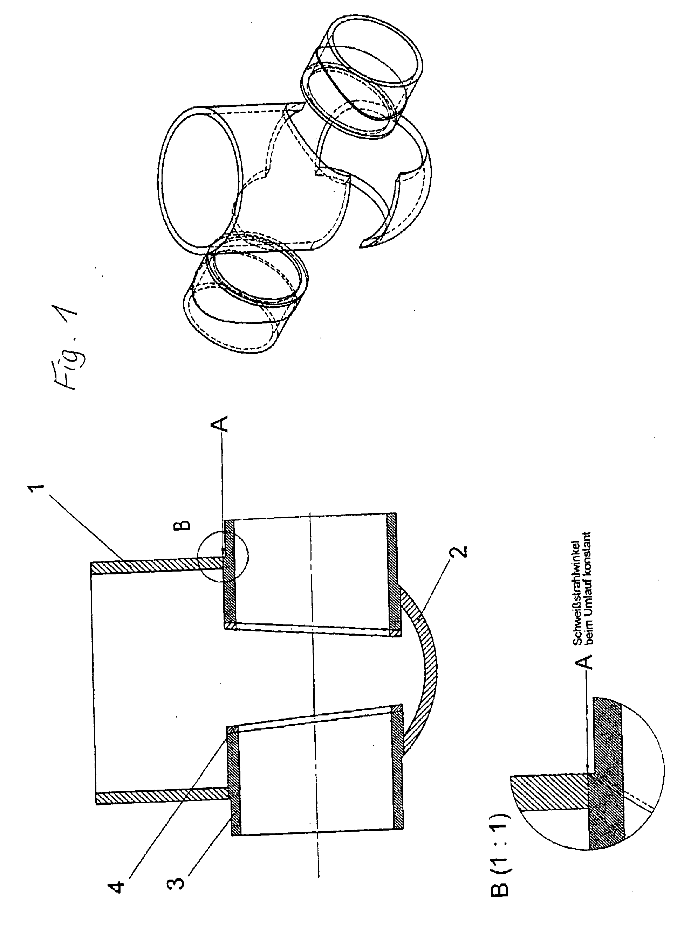

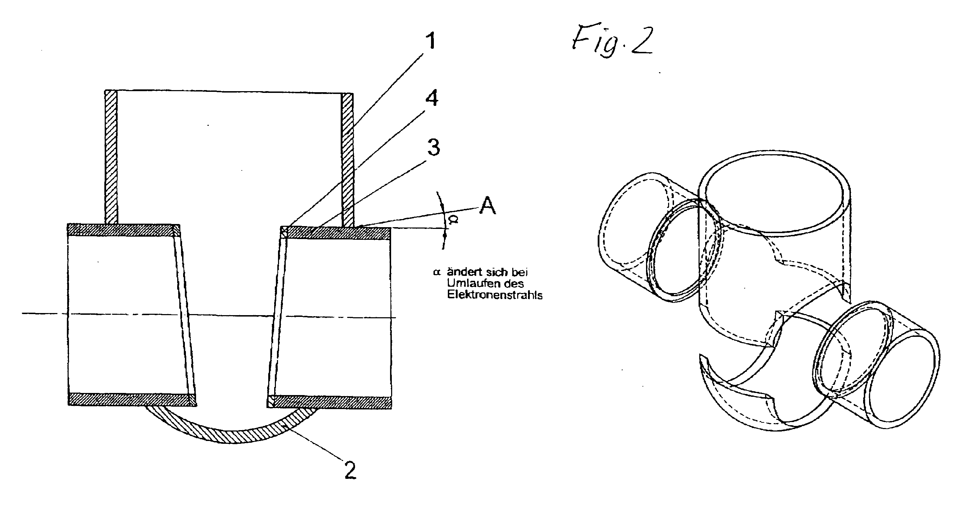

Figur 2:
Wie Figur 1, aber Stutzen 3 ohne speziell angedrehte Kontur a der Figur 2. Der Elektronenstrahl A wird hier im Winkel α der in Abhängigkeit von der Tiefe der Schweißnaht pro Umlauf um den Stutzen 3 im Bereich von 2° bis 10° variiert wird, geführt, um eine komplette Durchschweißung der Naht Stutzen 3 mit Rohr 1/Halbkugelboden 2 zu erreichen.

## Patentansprüche

1. Schiebergehäusemittelteil, **dadurch gekennzeichnet, daß**
die Stutzen (3) mit einer Kontur a versehen sind, die mit der Durchdringungskontur Stutzen (3) mit der Schweißbaugruppe Rohr (1)/Halbkugelboden (2) identisch sind und von der Außenfläche b des Stutzens (3) bis zum jeweiligen Durchdringungspunkt des Schweißbaugruppe Rohr (1)/Halbkugelboden (2) verläuft und in diesem Bereich im Außendurchmesser um <= 5 mm abgearbeitet ist und somit das parallel zum Achse des Stutzens (3) umlaufende Rotieren des Elektronenstrahles A ermöglicht, bei gleichzeitigem Auftreffen des Elektronenstrahles A im Winkel 90° zur Achse der Schweißbaugruppe Rohr (1)/Halbkugelboden (2) auf die Naht von Stutzen (3) mit der Schweißbaugruppe Rohr (1)/ Halbkugelboden (2).

2. Schiebergehäusemittelteil nach Anspruch 1, **dadurch gekennzeichnet, daß**
auf die spezielle Kontur a mit dem nach b gerichteten mechanischen Abarbeiten des Außendurchmessers des Stutzens (3) verzichtet wird und statt dessen die Durchschweißung der Naht mit dem Elektronenstrahl B, dessen Winkel α <= 10° zur Stutzenachse entsprechend der jeweiligen Nahttiefe im Verlauf des Umlaufes des Elektronenstrahles A variiert, um eine vollständige Durchschweißung zu gewährleisten.
